# FASCICULE DE BREVET EUROPEEN

(11) **EP 2 307 735 B1**
(45) Date de publication et mention de la délivrance du brevet: **02.08.2017**
(21) Numéro de dépôt: 09797552.8
(22) Date de dépôt: 15.06.2009
(51) Int. Cl.: F01D 17/16, F04D 27/02, F02C 6/08, F04D 29/68, F04D 29/56

(54) **COMPRESSEUR DE TURBOMACHINE**
TURBOMASCHINENVERDICHTER
TURBOMACHINE COMPRESSOR

(30) Priorité: 25.06.2008 FR 0803551
(43) Date de publication de la demande: 13.04.2011
(73) Titulaire: Snecma, 75015 Paris (FR)
(72) Inventeur: DOMERCQ, Olivier, Stéphane, F-77170 Brie Comte Robert (FR); PERROT, Vincent, Paul, Gabriel, F-94700 Maisons-Alfort (FR)
(74) Mandataire: Ramey, Daniel
(86) Numéro de dépôt international: PCT/FR2009/000710
(87) Numéro de publication internationale: WO 2010/007224

(56) Documents cités:
- GB-A- 1 286 785
- GB-A- 2 210 935
- US-A- 3 123 283
- US-A- 3 542 484
- US-A- 4 856 962

## Description

La présente invention concerne un compresseur de turbomachine telle qu'un turboréacteur ou un turbopropulseur d'avion, comprenant au moins un étage redresseur formé d'aubes à calage variable.

Le document US-A-3123283 décrit un compresseur de turbomachine avec toutes les caractéristiques du préambule de la revendication 1.

Un étage redresseur d'un compresseur du type précité comprend une rangée annulaire d'aubes de stator à calage variable qui sont portées par un carter externe du compresseur. Chaque aube comprend une pale qui est reliée à son extrémité radialement externe par une platine à contour sensiblement circulaire à un pivot cylindrique radial qui définit l'axe de rotation de l'aube et qui est guidé en rotation dans un orifice correspondant du carter externe. L'extrémité radialement interne de la pale de chaque aube comprend en général un second pivot cylindrique s'étendant le long de l'axe de rotation de l'aube et guidé en rotation dans un orifice d'un carter interne du compresseur. De façon connue, l'extrémité radialement externe du pivot externe de chaque aube est reliée par une biellette à un anneau de commande déplacé en rotation autour du carter externe par un vérin ou analogue. La rotation de l'anneau de commande est transmise par les biellettes aux pivots externes des aubes et les fait tourner autour de leurs axes.

Le calage angulaire des aubes de stator dans une turbomachine est destiné à adapter la géométrie du compresseur à son point de fonctionnement et notamment à optimiser le rendement et la marge au pompage de cette turbomachine et à réduire sa consommation de carburant dans les différentes configurations de vol.

Chacune de ces aubes est déplaçable en rotation autour de son axe entre une première position « d'ouverture » ou « de pleine ouverture » dans laquelle chaque aube s'étend sensiblement parallèlement à l'axe longitudinal de la turbomachine, et une seconde position « de fermeture » ou « de quasi-fermeture » dans laquelle les aubes sont inclinées par rapport à l'axe de la turbomachine et réduisent ainsi la section de passage de l'air à travers l'étage d'aubes. Lorsque les aubes sont en position d'ouverture, le débit d'air s'écoulant dans le compresseur a une valeur maximale, et lorsque les aubes sont en position de fermeture, le débit d'air s'écoulant dans le compresseur a une valeur minimale (pour un régime de fonctionnement donné). Les aubes peuvent adopter des positions intermédiaires entre ces deux positions extrêmes pour ainsi s'adapter aux variations de débit d'air circulant dans le compresseur.

Lorsque la turbomachine est à bas régime ou en régime de ralenti, les aubes à calage variable sont amenées dans leur position de fermeture, et lorsque la turbomachine est en régime plein gaz (pour le décollage par exemple), les aubes sont amenées dans leur position d'ouverture.

A bas régime, malgré la position fermée des aubes de stator, l'angle d'incidence entre la direction d'écoulement de l'air dans la veine du compresseur et le profil peut atteindre de fortes valeurs qui donnent naissance à des décollements d'air réduisant encore la section de passage de l'air à travers l'étage d'aubes. Ces zones de décollement sont principalement localisées au niveau des extrémités radialement interne et externe, et disparaissent lorsque l'incidence du fluide sur les aubes atteint des valeurs plus réduites.

Il est connu de limiter ces décollements dans des grilles d'aubes de stator par des prélèvements d'air dans les zones concernées, grâce à des orifices ménagés au niveau du carter externe ou interne dans l'environnement des aubes. Toutefois, la géométrie de ces prélèvements est en général fixe et, si le prélèvement est bénéfique à un régime donné de fonctionnement du compresseur, sa présence en continu, y compris à des régimes où il n'est pas nécessaire, peut affecter les performances du moteur (en dégradant le rendement du compresseur et donc la consommation spécifique). En outre, une géométrie fixe de prélèvement limite les capacités d'optimisation de la marge au pompage d'un compresseur.

L'invention a notamment pour but d'apporter une solution simple, efficace et économique à ces inconvénients.

Elle propose à cet effet un compresseur de turbomachine, comprenant un carter annulaire et au moins un étage redresseur formé d'une rangée annulaire d'aubes à calage variable comportant chacune une pale reliée à au moins une extrémité par une platine à contour sensiblement circulaire à un pivot cylindrique radial guidé en rotation dans un orifice correspondant du carter, chaque aube étant déplaçable en rotation autour d'un axe défini par le pivot de l'aube entre une première position et une seconde position, caractérisé en ce que les platines d'au moins certaines des aubes comportent chacune un orifice de prélèvement d'air dans la veine du compresseur, ces orifices étant destinés à communiquer avec des trous de passage d'air formés dans le carter lorsque les aubes sont dans la première position, et à être obturés par le carter lorsque les aubes sont dans la seconde position, de façon à ce que le débit de prélèvement d'air dépende de l'angle de calage des aubes.

Avantageusement, les aubes sont déplaçables entre une position d'ouverture et une position de fermeture, les orifices des platines des aubes étant destinés à communiquer avec les trous du carter lorsque les aubes sont en position de fermeture ou dans une position intermédiaire, et à être obturés par le carter lorsque les aubes sont en position d'ouverture.

Dans ce dernier cas, les aubes étant en position d'ouverture, les orifices des platines des aubes sont obturés par le carter et il n'y a donc pas d'air prélevé. Le rendement de la turbomachine n'est donc pas affecté par le prélèvement d'air aux régimes élevés où les aubes sont en position d'ouverture. Lorsque les aubes sont en position de fermeture ou en position intermédiaire, les orifices des platines des aubes communiquent avec les trous formés dans le carter, générant ainsi une section disponible au prélèvement de fluide qui varie avec l'angle de calage, permettant à une faible partie du débit d'air s'écoulant dans la veine du compresseur d'être prélevée pour réduire les décollements d'air précités, ce qui améliore les performances de la turbomachine à bas régime ou à régime intermédiaire.

En d'autres termes, le calage angulaire des aubes de stator permet de moduler le débit d'air prélevé dans la veine du compresseur, ce débit étant nul à plein régime pour ne pas pénaliser et dégrader la consommation spécifique du moteur et ayant une valeur déterminée à bas régime pour réduire les décollements de l'air sur les aubes. Le débit maximum d'air prélevé représente par exemple moins de 5% du débit d'air s'écoulant dans la veine du compresseur. Ce débit varie en fonction de l'angle de calage des aubes et peut atteindre des valeurs moyennes lorsque les aubes sont dans des positions intermédiaires.

Le prélèvement d'air peut avoir lieu au niveau de la platine externe ou au niveau de la platine interne de chaque aube, voire les deux. Le prélèvement d'air sur une seule des platines de chaque aube permet d'éviter le décollement d'air sur la pale de cette aube, sur sensiblement toute sa dimension radiale.

Les orifices des platines des aubes peuvent chacun avoir une forme sensiblement circulaire, triangulaire, oblongue, rectangulaire ou trapézoïdale. Les orifices des platines peuvent être des échancrures de la périphérie des platines. Les trous du carter peuvent également chacun avoir une forme sensiblement circulaire, triangulaire, oblongue, rectangulaire ou trapézoïdale.

Avantageusement, les orifices des platines des aubes débouchent dans la veine du compresseur, du côté des extrados des pales de ces aubes. C'est en effet au niveau des extrados des pales des aubes que le flux d'air s'écoulant dans la veine est soumis à un phénomène de dépression favorisant la création de zones de décollement.

Les orifices des platines peuvent avoir chacun un diamètre ou une dimension transversale supérieure à celle des trous du carter de façon à ce que les débits d'air prélevés soient notamment fonction des diamètres ou des dimensions transversales des trous du carter. En variante, les orifices des platines ont chacun un diamètre ou une dimension transversale inférieure à celle des trous du carter. Préférentiellement, des douilles de calibration du débit d'air prélevé sont montées dans les trous du carter ou dans les orifices des platines.

L'invention concerne également une turbomachine, telle qu'un turboréacteur, un turbopropulseur d'avion, un turbomoteur d'hélicoptère, une machine industrielle, ou tout autre machine utilisant un compresseur avec des aubages à calage variable (y compris un compresseur centrifuge), caractérisée en ce qu'elle comprend un compresseur du type précité.

L'invention concerne enfin une aube à calage variable pour un compresseur tel que décrit ci-dessus, caractérisée en ce qu'elle comprend une pale reliée à une extrémité par une platine à contour sensiblement circulaire à un pivot cylindrique définissant l'axe de rotation de l'aube, la platine comportant au moins un orifice s'étendant sensiblement parallèlement à l'axe de rotation de l'aube et débouchant du côté de la pale, au voisinage de l'extrados de cette pale.

L'invention sera mieux comprise et d'autres détails, caractéristiques et avantages de la présente invention apparaîtront plus clairement à la lecture de la description qui suit, faite à titre d'exemple non limitatif et en référence aux dessins annexés dans lesquels :
- la figure 1 est une demi-vue schématique partielle en coupe axiale d'un étage d'aubes à calage variable d'un compresseur de turbomachine selon la technique antérieure,
- la figure 2 est une vue schématique partielle de l'étage d'aubes de la figure 1, vu de dessus, et illustre les aubes en position de fermeture ou de quasi-fermeture,
- la figure 3 est une vue correspondant à la figure 2 et illustre les aubes en position d'ouverture ou de pleine ouverture,
- les figures 4 et 5 sont des vues schématiques partielles d'un étage d'aubes à calage variable d'un compresseur de turbomachine selon l'invention, vu de dessus, et illustrent respectivement les aubes de cet étage en positions de fermeture et d'ouverture,
- les figures 6 à 8 sont des vues schématiques partielles d'une variante de réalisation de l'étage d'aubes à calage variable selon l'invention, vu de dessus, et illustrent trois positions particulières des aubes de cet étage,
- les figures 9 et 10 sont des vues schématiques d'autres variantes de réalisation d'aubes à calage variable, vues de dessus.

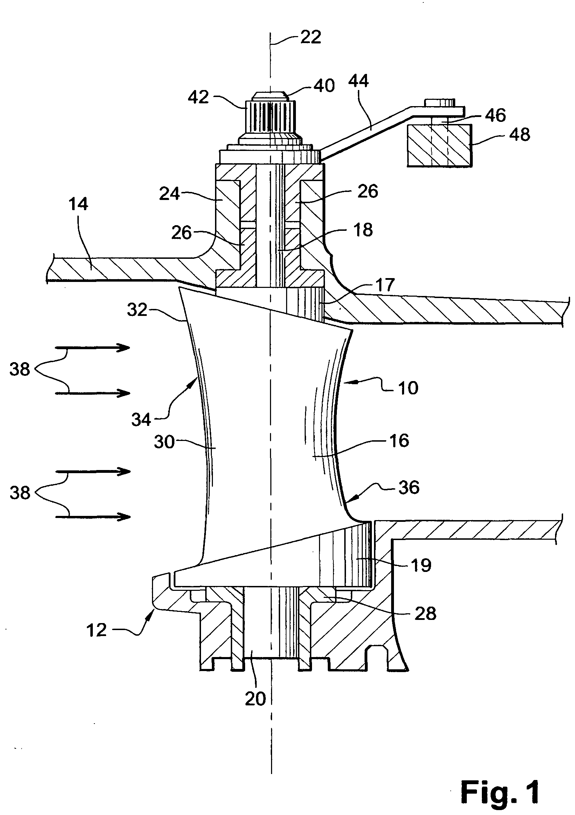

On se réfère d'abord à la figure 1 qui représente un étage redresseur d'aubes 10 à calage variable d'un compresseur haute-pression de turbomachine, ces aubes 10 étant régulièrement réparties autour de l'axe longitudinal de la turbomachine et s'étendant sensiblement radialement entre un carter interne 12 et un carter externe 14 du compresseur.

Chaque aube 10 comprend une pale 16 reliée à son extrémité radialement externe par une première platine 17 à un pivot cylindrique radial 18, et à son extrémité radialement interne par une seconde platine 19 à un pivot cylindrique radial 20, les pivots interne 20 et externe 18 définissant l'axe 22 de rotation de l'aube.

Le pivot cylindrique externe 18 est engagé dans une cheminée cylindrique 24 du carter externe 14 et est guidé en rotation dans cette cheminée par des bagues cylindriques 26. Le pivot cylindrique interne 20 est engagé dans un logement cylindrique du carter interne 12 et est guidé en rotation dans ce logement par une douille cylindrique 28.

La pale 16 de chaque aube 10 comprend un intrados 30 et un extrados 32 reliés entre eux en amont par un bord 34 d'attaque et en aval par un bord 36 de fuite des gaz 38 s'écoulant dans la veine du compresseur (figures 1 à 3). Les platines interne 19 et externe 17 ont chacune un contour sensiblement circulaire et sont logées dans des évidements de formes complémentaires du carter interne 12 et du carter externe 14, respectivement.

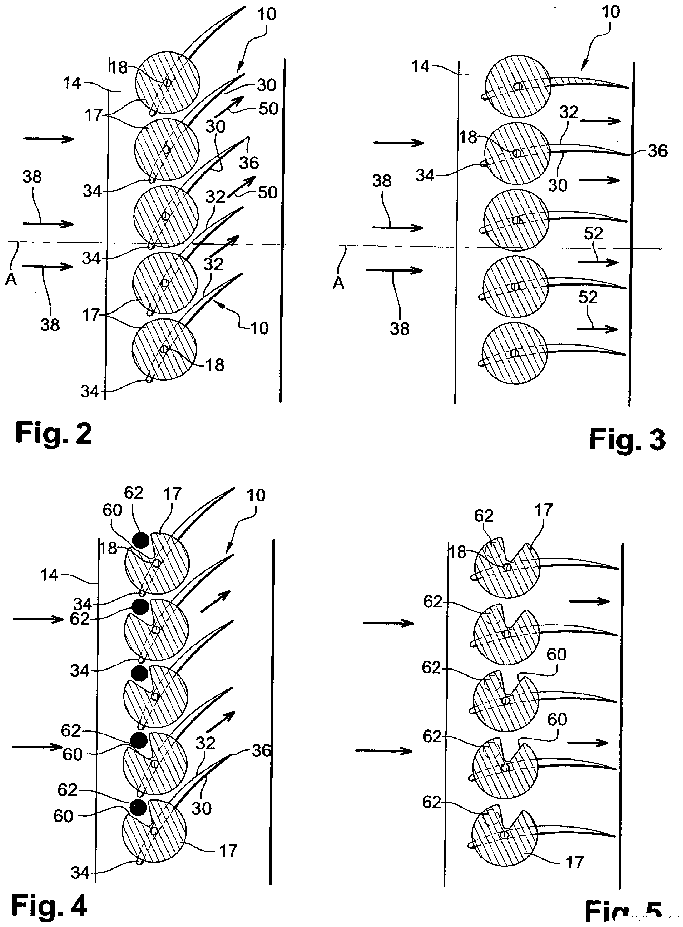

Les aubes 10 sont déplaçables en rotation autour de leurs axes 22 entre une position de fermeture ou de quasi-fermeture , représentée en figure 2, et une position d'ouverture ou de pleine ouverture de cette veine, représentée en figure 3.

Dans la position de fermeture de la figure 2, les pales 16 des aubes sont inclinées par rapport à l'axe longitudinal A de la turbomachine et définissent entre elles une section minimale de passage d'air dans la veine (flèche 50). Les aubes 10 sont amenées dans cette position lorsque la turbomachine est à bas régime ou au ralenti, le débit d'air s'écoulant dans le compresseur ayant alors une valeur minimale.

Dans la position d'ouverture de la figure 3, les pales 16 des aubes s'étendent sensiblement parallèlement à l'axe A de la turbomachine de façon à ce que la section de passage d'air entre les pales soit maximale (flèche 52). Les aubes 10 sont amenées dans cette position lorsque la turbomachine est au régime plein gaz, le débit d'air s'écoulant dans le compresseur ayant alors une valeur maximale.

En position de fermeture, on constate toutefois des décollements d'air sur les pales 16, entre les platines 17 et 19, en raison de la forte incidence de l'écoulement sur les pales, ces décollements disparaissant lorsque les aubes 10 sont proches de leurs conditions de fonctionnement nominales.

L'invention permet de remédier à ce problème grâce à un prélèvement d'air au niveau des extrémités radialement interne et/ou externe des pales des aubes, ce prélèvement étant maximal lorsque les aubes sont en position de fermeture et nul lorsque ces aubes sont en position de pleine ouverture de sorte qu'il n'affecte pas négativement les performances de la turbomachine aux régimes élevés. Pour cela, le prélèvement d'air dépend de l'angle de calage des aubes.

Selon la présente invention, ce prélèvement d'air a lieu à travers des orifices de la platine interne et/ou de la platine externe d'au moins certaines des aubes d'un étage du compresseur, ces orifices communiquant avec des trous ou des perçages du carter correspondant du compresseur pour assurer l'évacuation de l'air prélevé.

Lorsque la platine interne 19 comporte de tels orifices de prélèvement d'air, des trous ou perçages de passage de l'air prélevé sont formés dans le carter interne 12, et lorsque la platine externe 17 comporte de tels orifices, des trous ou perçages d'évacuation de l'air prélevé sont formés dans le carter externe 14.

Pour des raisons de clarté, les exemples de réalisation de l'invention décrits dans ce qui suit concernent uniquement des orifices de prélèvement d'air formés dans les platines externes 17 des aubes et destinés à communiquer avec des trous ou perçages correspondants du carter externe 14. Ces exemples de réalisation sont toutefois applicables aux platines internes 19 des aubes et au carter interne 12.

Dans le mode de réalisation des figures 4 et 5, les aubes 10 diffèrent des aubes des figures 1 à 3 en ce que leurs platines externes 17 comportent chacune une échancrure traversante 60. Cette échancrure 60 s'étend depuis le bord circulaire de la platine vers l'axe de rotation 22 de l'aube. Elle a une forme sensiblement triangulaire dont la base est sensiblement tangente au bord circulaire de la platine 17 et dont le sommet opposé est incurvé et situé au voisinage du pivot externe 18 de l'aube. Les deux bords latéraux de chaque échancrure 60 sont reliés à la périphérie circulaire de la platine par des coins de forme arrondie convexe.

L'échancrure 60 forme un angle d'environ 50 à 80° autour de l'axe 22. Elle traverse sensiblement radialement la platine et débouche sur la face interne de la platine 17, du côté de l'extrados 32 de la pale 16 de l'aube où l'air est en légère dépression.

Des trous 62 sensiblement circulaires sont formés dans le carter externe 14 du compresseur, à proximité des cheminées 24 de logement des pivots externes 18 des aubes. Le nombre de trous 62 du carter peut être égal au nombre d'aubes 10, ou bien être un multiple entier du nombre d'aubes.

Dans l'exemple de réalisation des figures 4 et 5, un trou 62 du carter est formé à proximité de chaque cheminée 24. Lorsque les aubes sont en position de fermeture (figure 4), les trous 62 du carter sont situés au droit des échancrures 60 et communiquent avec celles-ci de façon à ce qu'une partie du débit d'air s'écoulant dans le compresseur soit prélevée et acheminée vers l'extérieur du carter externe (ce débit d'air ayant une valeur maximale représentée schématiquement par le remplissage complet en noir des ronds 62 représentant les trous du carter). Cet air peut être récupéré dans un collecteur annulaire (non représenté) s'étendant autour du carter externe et dans lequel débouchent les trous 62 de ce carter.

Lorsque les aubes 10 sont en position d'ouverture (figure 5), les extrémités radialement externes des échancrures 60 des platines ne communiquent plus avec les trous 62 du carter et il n'y a donc pas d'air prélevé par ce biais dans la veine du compresseur. Dans cette position, les échancrures 60 des platines sont obturées par le carter 14 et les trous 62 du carter sont obturés par les platines 17.

Plus la section de passage d'air entre une échancrure 60 et le trou 62 correspondant du carter est importante et plus le débit d'air prélevé est important. Lorsque l'échancrure 60 est alignée radialement avec le trou 62 du carter (figure 4), le débit d'air prélevé est maximal et dépend de la section transversale du trou du carter qui est ici plus faible que celle de l'échancrure 60. La calibration précise de débit d'air prélevé est donc possible dans ce cas par le contrôle de la section du trou 62 usiné dans le carter.

Dans le cas particulier d'un étage formé de 100 aubes régulièrement réparties autour de l'axe longitudinal de la turbomachine, le débit total d'air prélevé représente par exemple 5% du débit d'air circulant dans le compresseur. Le débit d'air prélevé par chaque trou 62 représente alors 0,05% du débit d'air du compresseur.

Les aubes 10 peuvent adopter une ou plusieurs positions intermédiaires entre les positions représentées en figures 4 et 5, le débit d'air prélevé étant alors fonction de la section de passage de l'air entre les échancrures 60 des platines et les trous 62 du carter.

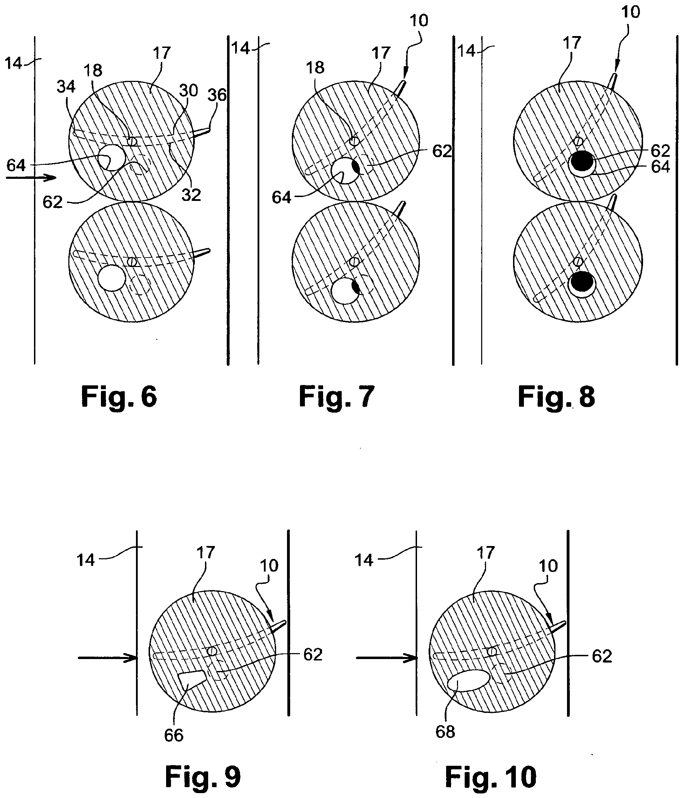

Dans la variante de réalisation représentée aux figures 6 à 8, les platines 17 des aubes comprennent des orifices 64 traversants sensiblement circulaires de prélèvement d'air. Les orifices ont ici un diamètre supérieur à celui des trous 62 du carter. Ces orifices 64 ont une orientation sensiblement radiale et débouchent sur les faces radialement internes des platines externes des aubes, du côté des extrados 32 des pales de ces aubes.

La figure 6 représente les aubes 10 en position d'ouverture dans laquelle les orifices 64 de leurs platines ne sont pas alignés et ne communiquent pas avec les trous 62 du carter 14. Le débit d'air prélevé est alors nul. Les aubes 10 sont dans une position intermédiaire en figure 7 où le débit prélevé a une valeur donnée, et dans une position de fermeture en figure 8 où la section de passage offerte au prélèvement définie par la coïncidence des sections des orifices 64 des platines et de celles des trous 62 du carter est maximale.

Les échancrures 60 et les orifices 64 des platines, ainsi que les trous 62 du carter, peuvent avoir n'importe quelle forme et ont par exemple une forme carrée, triangulaire, trapézoïdale, oblongue, ovoïde, circulaire, etc...

Dans le cas de la figure 9, l'orifice 66 de la platine externe 17 de l'aube a une forme sensiblement triangulaire, et dans celui de la figure 10, l'orifice 68 de la platine 17 a une forme oblongue. Ces différentes formes des orifices ou échancrures de la platine et des trous du carter permettent de faire varier le débit d'air prélevé de façon linéaire ou non linéaire lors du déplacement en rotation des aubes autour de leurs axes.

Les platines 17, 19 des aubes peuvent comprendre plus d'un orifice de prélèvement d'air. De plus, chacun de ces orifices peut communiquer avec plus d'un trou ou perçage du carter lorsque les aubes sont en position fermée. Les orifices ou échancrures des platines ainsi que les trous du carter ont une orientation sensiblement radiale, voire légèrement oblique. Des douilles cylindriques non représentées peuvent être logées dans les trous du carter pour calibrer avec précision le débit de prélèvement d'air.

## Revendications

1. Compresseur de turbomachine, comprenant un carter annulaire (14) et au moins un étage redresseur formé d'une rangée annulaire d'aubes (10) à calage variable comportant chacune une pale (16) reliée à au moins une extrémité par une platine (17) à contour sensiblement circulaire à un pivot cylindrique radial (18) guidé en rotation dans un orifice correspondant du carter (14), chaque aube étant déplaçable en rotation autour d'un axe défini par le pivot de l'aube entre une première position et une seconde position, **caractérisé en ce que** les platines d'au moins certaines des aubes comportent chacune un orifice (60, 64, 66, 68) de prélèvement d'air dans la veine du compresseur, ces orifices étant destinés à communiquer avec des trous (62) de passage d'air formés dans le carter lorsque les aubes sont dans la première position, et à être obturés par le carter lorsque les aubes sont dans la seconde position, de façon à ce que le débit de prélèvement d'air dépende de l'angle de calage des aubes.

2. Compresseur selon la revendication 1, **caractérisé en ce que** les aubes (10) sont déplaçables entre une position d'ouverture et une position de fermeture, les orifices (60, 64, 66, 68) des platines des aubes étant destinés à communiquer avec les trous (62) du carter (14) lorsque les aubes sont en position de fermeture ou dans une position intermédiaire, et à être obturés par le carter lorsque les aubes sont en position d'ouverture.

3. Compresseur selon la revendication 1 ou 2, **caractérisé en ce que** les orifices sont formés dans des platines (17) radialement externes des aubes, et sont destinés à communiquer avec des trous d'un carter externe (14) entourant les aubes.

4. Compresseur selon la revendication 1 ou 2, **caractérisé en ce que** les orifices sont formés dans des platines (19) radialement internes des aubes, et sont destinés à communiquer avec des trous d'un carter interne (12) entouré par les aubes.

5. Compresseur selon l'une des revendications précédentes, **caractérisé en ce que** les orifices (64, 66, 68) des platines des aubes ont chacun une forme sensiblement circulaire, triangulaire, oblongue, rectangulaire ou trapézoïdale.

6. Compresseur selon l'une des revendications 1 à 4, **caractérisé en ce que** les orifices des platines des aubes sont des échancrures (60) de la périphérie des platines.

7. Compresseur selon l'une des revendications précédentes, **caractérisé en ce que** les trous (62) du carter ont chacun une forme sensiblement circulaire, triangulaire, oblongue, rectangulaire ou trapézoïdale.

8. Compresseur selon l'une des revendications précédentes, **caractérisé en ce que** les orifices (60, 64, 66, 68) des platines des aubes débouchent dans la veine du compresseur, du côté des extrados (32) des pales (16) de ces aubes.

9. Compresseur selon l'une des revendications précédentes, **caractérisé en ce que** les orifices (60, 64, 66, 68) des platines des aubes ont chacun un diamètre ou une dimension transversale supérieur à celui des trous (62) du carter.

10. Compresseur selon l'une des revendications précédentes, **caractérisé en ce que** des douilles de calibration du débit d'air prélevé sont montées dans les trous (62) du carter ou dans les orifices (60, 64, 66, 68) des platines.

11. Turbomachine, telle qu'un turboréacteur, un turbopropulseur d'avion, un turbomoteur d'hélicoptère ou une machine industrielle, **caractérisée en ce qu'**elle comprend un compresseur selon l'une des revendications précédentes.

12. Aube à calage variable pour un compresseur selon l'une des revendications 1 à 10, **caractérisée en ce qu'**elle comprend une pale (16) reliée à au moins une extrémité par une platine (17) à contour sensiblement circulaire à un pivot cylindrique (18) définissant l'axe (22) de rotation de l'aube, la platine comportant au moins un orifice (60, 64, 66, 68) s'étendant sensiblement parallèlement à l'axe de rotation de l'aube et débouchant du côté de la pale au voisinage de l'extrados (32) de cette pale.

## Patentansprüche

1. Turbomaschinenverdichter, enthaltend ein ringförmiges Gehäuse (14) und zumindest eine Leitschaufelstufe, die aus einer ringförmigen Reihe von Schaufeln (10) mit variabler Verstellung gebildet ist, die jeweils ein Schaufelblatt (16) enthalten, das an zumindest einem Ende über eine Scheibe (17) mit im Wesentlichen kreisförmiger Kontur mit einem radial verlaufenden, zylindrischen Drehzapfen (18) verbunden ist, der drehbar in einer entsprechenden Öffnung des Gehäuses (14) geführt ist, wobei jede Schaufel um eine Achse, welche der Drehzapfen der Schaufel definiert, zwischen einer ersten Position und einer zweiten Position verdrehbar ist, **dadurch gekennzeichnet, dass** die Scheiben zumindest bestimmter der Schaufeln jeweils eine Öffnung (60, 64, 66, 68) zur Luftentnahme aus einem Luftkanal des Verdichters enthalten, wobei diese Öffnungen dazu bestimmt sind, mit in dem Gehäuse ausgebildeten Luftdurchgangslochungen (62) zu kommunizieren, wenn die Schaufeln in der ersten Position sind, und über das Gehäuse verschlossen zu werden, wenn die Schaufeln in der zweiten Position sind, so dass die Luftentnahmemenge von dem Verstellungwinkel der Schaufeln abhängt.

2. Verdichter nach Anspruch 1, **dadurch gekennzeichnet, dass** die Schaufeln (10) zwischen einer Offenposition und einer Schließposition verlagerbar sind, wobei die Öffnungen (60, 64, 66, 68) der Scheiben der Schaufeln dazu bestimmt sind, mit den Lochungen (62) des Gehäuses (14) zu kommunizieren, wenn die Schaufeln in der Schließposition bzw. in einer Zwischenposition sind, und über das Gehäuse verschlossen zu werden, wenn die Schaufeln in der Offenposition sind.

3. Verdichter nach Anspruch 1 oder 2, **dadurch gekennzeichnet, dass** die Öffnungen in den radial äußeren Scheiben (17) der Schaufeln ausgebildet und dazu bestimmt sind, mit Lochungen eines äußeren Gehäuses (14) zu kommunizieren, welches die Schaufeln umgibt.

4. Verdichter nach Anspruch 1 oder 2, **dadurch gekennzeichnet, dass** die Öffnungen in radial inneren Scheiben (19) der Schaufeln ausgebildet und dazu bestimmt sind, mit Lochungen eines inneren Gehäuses (12) zu kommunizieren, das von den Schaufeln umgeben wird.

5. Verdichter nach einem der vorangehenden Ansprüche, **dadurch gekennzeichnet, dass** die Öffnungen (64, 66, 68) der Scheiben der Schaufeln jeweils eine im Wesentlichen kreisförmige, dreieckförmige, längliche, rechteckförmige oder trapezförmige Form haben.

6. Verdichter nach einem der Ansprüche 1 bis 4, **dadurch gekennzeichnet, dass** die Öffnungen der Scheiben der Schaufeln Aussparungen (60) am Umfang der Scheiben sind.

7. Verdichter nach einem der vorangehenden Ansprüche, **dadurch gekennzeichnet, dass** die Lochungen (62) des Gehäuses jeweils eine im Wesentlichen kreisförmige, dreieckförmige, längliche, rechteckförmige oder trapezförmige Form haben.

8. Verdichter nach einem der vorangehenden Ansprüche, **dadurch gekennzeichnet, dass** die Lochungen (60, 64, 66, 68) der Scheiben der Schaufeln auf der Seite der Rückseiten (32) der Blätter (16) dieser Schaufeln in den Luftkanal des Verdichters münden.

9. Verdichter nach einem der vorangehenden Ansprüche, **dadurch gekennzeichnet, dass** die Öffnungen (60, 64, 66, 68) der Scheiben der Schaufeln jeweils einen Durchmesser bzw. eine Querabmessung größer als die Lochungen (62) des Gehäuses haben.

10. Verdichter nach einem der vorangehenden Ansprüche, **dadurch gekennzeichnet, dass** Kalibrierhülsen für die Entnahmeluftmenge in den Lochungen (62) des Gehäuses bzw. in den Öffnungen (60, 64, 66, 68) der Scheiben montiert sind.

11. Turbomaschine, wie etwa Turbostrahltriebwerk, Turboprop-Triebwerk für Flugzeuge, Hubschrauber-Triebwerk oder industrielle Maschine, **dadurch gekennzeichnet, dass** sie einen Verdichter nach einem der vorangehenden Ansprüche aufweist.

12. Schaufel mit variabler Verstelleng für einen Verdichter nach einem der Ansprüche 1 bis 10, **dadurch gekennzeichnet, dass** sie ein Schaufelblatt (16) aufweist, das an zumindest einem Ende, über eine Scheibe (17) mit im Wesentlichen kreisförmiger Kontur, mit einem zylindrischen Drehzapfen (18) verbunden ist, der die Drehachse (22) der Schaufel definiert, wobei die Scheibe zumindest eine Öffnung (60, 64, 66, 68) aufweist, die sich im Wesentlichen parallel zur Drehachse der Schaufel erstreckt und auf der Seite des Schaufelblatts benachbart zur Rückseite (32) dieses Schaufelblatts ausmündet.

## Claims

1. A turbomachine compressor, comprising an annular casing (14) and at least one stator stage formed by an annular row of variable-pitch blades (10), each having an airfoil section (16) connected at at least one end by a mounting plate (17) having an approximately circular contour to a radial cylindrical pivot (18), said pivot being guided in rotation in a corresponding orifice in the casing (14), each blade being rotatable around an axis defined by the pivot of the blade between a first position and a second position, **characterized in that** the mounting plates of at least some of the blades each have an orifice (60, 64, 66, 68) for bleeding air into the duct of the compressor, these orifices being intended to communicate with air-passage holes (62) formed in the casing when the blades are in the first position and to be closed off by the casing when the blades are in the second position, such that the air bleed flow rate depends on the pitch angle of the blades.

2. The compressor as claimed in claim 1, **characterized in that** the blades (10) can be moved between an open position and a closed position, the orifices (60, 64, 66, 68) of the mounting plates of the blades being intended to communicate with the holes (62) of the casing (14) when the blades are in the closed position or in an intermediate position and to be closed off by the casing when the blades are in the open position.

3. The compressor as claimed in claim 1 or 2, **characterized in that** the orifices are formed in radially external mounting plates (17) of the blades and are intended to communicate with holes in an external casing (14) surrounding the blades.

4. The compressor as claimed in claim 1 or 2, **characterized in that** the orifices are formed in radially internal mounting plates (19) of the blades and are intended to communicate with holes in an internal casing (12) surrounded by the blades.

5. The compressor as claimed in one of the preceding claims, **characterized in that** the orifices (64, 66, 68) in the mounting plates of the blades each have an approximately circular, triangular, elongate, rectangular or trapezoidal shape.

6. The compressor as claimed in one of claims 1 to 4, **characterized in that** the orifices in the mounting plates of the blades are indentations (60) in the periphery of the mounting plates.

7. The compressor as claimed in one of the preceding claims, **characterized in that** the holes (62) in the casing each have an approximately circular, triangular, elongate, rectangular or trapezoidal shape.

8. The compressor as claimed in one of the preceding claims, **characterized in that** the orifices (60, 64, 66, 68) in the mounting plates of the blades open into the duct of the compressor at the suction faces (32) of the airfoil sections (16) of these blades.

9. The compressor as claimed in one of the preceding claims, **characterized in that** the orifices (60, 64, 66, 68) in the mounting plates of the blades each have a diameter or a transverse dimension greater than that of the holes (62) in the casing.

10. The compressor as claimed in one of the preceding claims, **characterized in that** bushings for calibrating the flow of the air bled are mounted in the holes (62) in the casing or in the orifices (60, 64, 66, 68) in the mounting plates.

11. A turbomachine, such as a turbojet engine, an airplane turboprop engine, a helicopter turbine engine or an industrial machine, **characterized in that** it comprises a compressor as claimed in one of the preceding claims.

12. A variable-pitch blade for a compressor as claimed in one of claims 1 to 10, **characterized in that** it comprises an airfoil section (16) connected at at least one end, by a mounting plate (17) having an approximately circular contour, to a cylindrical pivot (18), said pivot defining the rotational axis (22) of the blade, the mounting plate having at least one orifice (60, 64, 66, 68) extending approximately parallel to the rotational axis of the blade and opening out at the airfoil section near the suction face (32) of this airfoil section.
